**Europäisches Patentamt**

**European Patent Office**

**Office européen des brevets**

(19)

(11) **EP 1 318 644 A1**

(12) **EUROPEAN PATENT APPLICATION**

(43) Date of publication:
**11.06.2003 Bulletin 2003/24**

(51) Int Cl.⁷: **H04L 29/06**

(21) Application number: **01811176.5**

(22) Date of filing: **04.12.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Ascom Systec AG
5506 Mägenwil (CH)**

(72) Inventor: **Lunn, Andrew
5504 Othmarsingen (CH)**

(74) Representative:
**Roshardt, Werner Alfred, Dipl.-Phys.
Keller & Partner
Patentanwälte AG
Schmiedenplatz 5
Postfach
3000 Bern 7 (CH)**

(54) **Voice transmission over high bitrate data networks**

(57)     In order to merge wireless telephony and wireless LAN networks, a new protocol stack is proposed. The new protocol stack (3) comprises the uppermost layers of a voice transmission protocol stack and the lowest layers of a data transmission protocol stack. For example it comprises the network layer (7), the interworking layer (8) and the application layer (9) of the DECT protocol stack and the two lowest layers, namely the physical layer (4) and the data link control layer (5) of the HiperLAN2 protocol stack. To convert the transmitted data from HiperLAN2 to DECT and vice versa, a new convergence layer (6) is introduced between the DECT network layer (6) and the HiperLAN2 data link control (5) layer. With this DECT over HiperLAN2 protocol stack (3) it is possible to more efficiently transmit voice data with a low and constant bitrate over a transmission network which is designed for transmission of bursty high bitrate data. Moreover, the users are offered high quality voice services as well as the whole DECT feature set while the voice data is efficiently transmitted over a wireless LAN infrastructure, which for example also carries IP based traffic.

Fig. 2

EP 1 318 644 A1

## Description

### Technical field

The invention relates to a method and a device for transmitting voice data over a wireless digital data transmission channel.

### Prior art

In the past, independent developments in different fields of telecommunication led to different network technologies, each technology being optimized for a special set of tasks. For example, there exist different communication systems for wired and wireless telecommunication or for asynchronous data transmission (such as file transfer) and isochronous or time critical data communication (such as telephony services). The increasing demand for mobile communication over the last few years have complicated the situation even more.

To benefit from the different advantages of the different technologies, each network technology has to be implemented separately, resulting in a plurality of networks to be installed. For instance, most office environments have two major telecommunication networks: a telephony network and a LAN/WAN (local area network/wide area network). Moreover, both of them often comprise of a wired as well as a wireless part.

Each network has to be set up and maintained, entailing high costs. Thus, it is desirable that different network technologies converge in order to provide different types of services on one underlying network.

There exist various attempts to merge the telephony networks with the LAN/WAN technology. Voice capabilities have been added to the LAN/WAN technology by using voice over IP (internet protocol), briefly VOIP. Conversely, current telephony networks such as GSM (global system for mobile communication), GPRS (general packet radio service), ISDN (integrated services digital network) and DECT (digital enhanced cordless telecommunications) networks offer data transmission services.

However, as each of these network technologies are optimized for a particular task, they are inefficient when used for executing other tasks. Isochronous data transmission, such as telephony services need a low but guaranteed and more or less constant bitrate. On the other hand, data transmission, which often has a bursty characteristic, usually requires bitrates 1000s of times higher. As IP based networks are designed to achieve good results with bursty high bitrate traffic, they are not very well suited for low constant bitrate services. Voice data transmission over IP based networks therefore results in big protocol overheads. They also suffer from the high and variable delay of data networks. Hence, VOIP has poor quality.

Nevertheless, the resulting quality of VOIP in the wired part of a LAN can be acceptable. But it usually is not acceptable for the wireless part of a LAN, where the expected bitrate typically is lower than in the wired part of the LAN.

### Summary of the Invention

It is an object of the invention to provide a method of the kind mentioned at the beginning, which allows to overcome the drawbacks of the prior art and which particularly allows to more efficiently transmit voice data over a wireless digital data transmission channel.

The object of the invention can be achieved with a method defined by claim 1. According to the invention, voice data is transmitted over a wireless digital data transmission channel by processing it with a certain number of the uppermost layers of a multiple layer, low bitrate, wireless voice transmission protocol stack and a certain number of the lowest layers of a multiple layer, high bitrate, wireless LAN (WLAN) protocol stack.

A protocol stack is a set of protocols defining how transmission of a certain kind of information over a certain kind of medium should be carried out. The OSI (open system interconnection) model defines seven layers, whereby each layer performs one or more functions. However, OSI does not define how these functions should be implemented. This is the object of a protocol stack where each protocol fulfils a specific function. Most of the known communication standards define a protocol stack according to the OSI model.

The invention combines a voice data transmission standard with a data transmission standard, thereby profiting from the respective advantages. By making use of the uppermost layers of a voice transmission protocol stack the invention provides the whole feature set of the voice standard to the user. And by making use of the lowest layers of a data transmission protocol stack, the invention allows an efficient transmission of the voice data over the communication channel, which is optimized for high bitrate data communication.

There exist several possibilities to transmit data according to the upper layers of a first protocol stack with the lower layers of a second protocol stack. Tunneling, where the data of the first protocol is encapsulated into the packets of the second protocol would be such a possibility.

However, in order to enable communication between the layers of the voice transmission standard and the layers of the data transmission standard, the invention utilizes another technique. The voice data is converged from one format into the other by processing it with a convergence layer which is inserted between the lowest layer of the voice transmission protocol part and the uppermost layer of the data transmission protocol part.

In a preferred embodiment, the invention uses the DECT protocol stack as the voice part. DECT is standardised using a layered approach. The DECT layers are (from bottom to top): a physical (PHY) layer, a medium access control (MAC) layer, a data link control (DLC) layer, a network layer, an interworking layer and an application layer.

DECT defines clean interfaces between these layers which allows the changing of the implementation of a layer without affecting the other layers. Compared with other wireless telephony standards like GSM and UMTS (universal mobile telecommunications systems), DECT provides a specialized, high quality telephone system both in terms of speech and feature set. The advantages of DECT comprise for example good quality of service (QoS) support, efficient protocol layering, small delays, no echoes and a rich feature set that can be used directly in a DECT over WLAN system.

WLAN solutions exist for different frequency bands. The 2.4 GHz frequency band for example is available almost everywhere in the world for WLAN systems. IEEE 802.11, IEEE 802.11(b) (IEEE: Institute of Electrical & Electronic engineers) and Bluetooth are widespread systems using this band. In addition this band is also available to users of scientific and medical equipment and other equipment such as microwave ovens. Hence, interference is not only a possibility, but rather likely.

Another frequency band which is available for WLAN systems is above 5 GHz. Because fewer systems use this band, the interference situation is much better. Apart from the HiperLAN2 (high performance radio LAN Type 2) and the IEEE 802.11(a) standards it is used by mobile satellite feeder links, military radar systems, personal-area networks, local loop systems and other systems. These rarely interfere with WLAN systems.

Since the HiperLAN2 standard uses a frequency band where interference is less probable and since it offers some genuine advantages over the IEEE 802.11, IEEE 802.11(a) and IEEE 802.11(b) standards in the area of QoS support and efficient support of small packets or mixed services, another preferred embodiment of the invention uses the lowest layers of the HiperLAN2 protocol stack.

The HiperLAN2 standard is a layered approach as well and specifies a PHY layer, a DLC layer and a number of convergence layers to allow existing LAN technologies to be used over HiperLAN2. Such existing LAN technologies include Ethernet, ATM (asynchronous transfer mode) and IEEE 1394 (commonly known as Firewire).

A favoured protocol stack combination is to use the three uppermost layers of the DECT protocol stack over the two lowest layers of the HiperLAN2 protocol stack. In other words the two lowest layers of the DECT protocol stack are removed and replaced with the two lowest layers of the HiperLAN2 protocol stack. This requires a new convergence layer which converts the HiperLAN2 services of the DLC layer into the format of the DECT network layer. This convergence layer contains DECT DLC functions where necessary.

There exist other alternatives to combine the DECT with the HiperLAN2 protocol stack. For instance it would be possible to keep the DECT DLC layer and to merge the HiperLAN2 DLC layer in the new convergence layer. Another possibility would be to use just the lowest layer of the data transmission protocol stack and the uppermost layer of the voice transmission stack and to develop a new layer containing all the functions of the removed layers. Such a new layer could of course be split up in several new layers.

Nevertheless, as there already exists a number of HiperLAN2 convergence layers based on the HiperLAN2 PHY and DLC layers, it is less demanding to implement a new convergence layer between the HiperLAN2 DLC layer and the DECT network layer than a new convergence layer between the HiperLAN2 PHY layer and the DECT DLC layer or any other two layers.

It is another object of the invention to provide a device for transmitting voice data efficiently over a wireless digital transmission channel. This object can be achieved with a device according to claim 6. The device comprises means for processing said voice data with a certain number of uppermost layers of a multiple layer, low bitrate, wireless voice transmission protocol stack and a certain number of lowest layers of a multiple layer, high bitrate, wireless LAN protocol stack.

For example, the device comprises an implementation of the three uppermost layers of the DECT protocol stack and an implementation of the two lowest layers of the HiperLAN2 protocol stack.

This ensures an efficient and high quality transmission of voice data over a WLAN, where the users are offered the whole feature set of the DECT standard.

As previously shown, it is advantageous that the device comprises a convergence layer which converges the voice data to be transmitted from the voice protocol layers to the data protocol layers and vice versa.

Mobility is a key feature for many users of such devices. There are known standards, like for example the HiperLAN2 standard, which support handover from one basestation to another on a break-before-make basis. That means an existing connection to the first basestation is broken and a new connection to the second basestation is built. But it is of course desirable that an existing connection is not interrupted when a user moves away from a first basestation towards a second basestation. Another useful feature, i. e. when local interference occurs, is the possibility to change the communication frequency.

A preferred embodiment of the device according to the invention therefore comprises means for performing a seamless handover of an existing connection from a first basestation to a second basestation or from a first to a second frequency within the same basestation.

QoS (quality of service) support is another feature which is useful. QoS support includes for instance methods for assuring a certain level of speech quality, i. e. a minimal bitrate and/or a maximum value for the delay. This is particularly important for the transmission of voice data, where quite a low but nevertheless constant bitrate and a maximum delay should be attained in order to guarantee a certain level of speech quality. Some communication systems as for example IEEE 802.11, do not have any QoS support.

The invented device therefore preferably comprises means for determining and controlling the quality of service while transmitting said voice data.

From the following detailed description and from all the claims as a whole it will be clear to a person skilled in the art, that there exist more advantageous embodiments and feature combinations of the invention.

## Brief description of the drawings

The drawings used for illustration of the examples show:

Fig. 1    A wireless data transmission network for transmitting voice data according to the invention:

Fig. 2    the protocol stack of a transmission system according to the invention;

Fig. 3    an application of the invention in an office environment and

Fig. 4    an illustration of different message paths in case of a handover.

In principle in the drawings the same objects are given the same reference signs.

## Ways of carrying out the invention

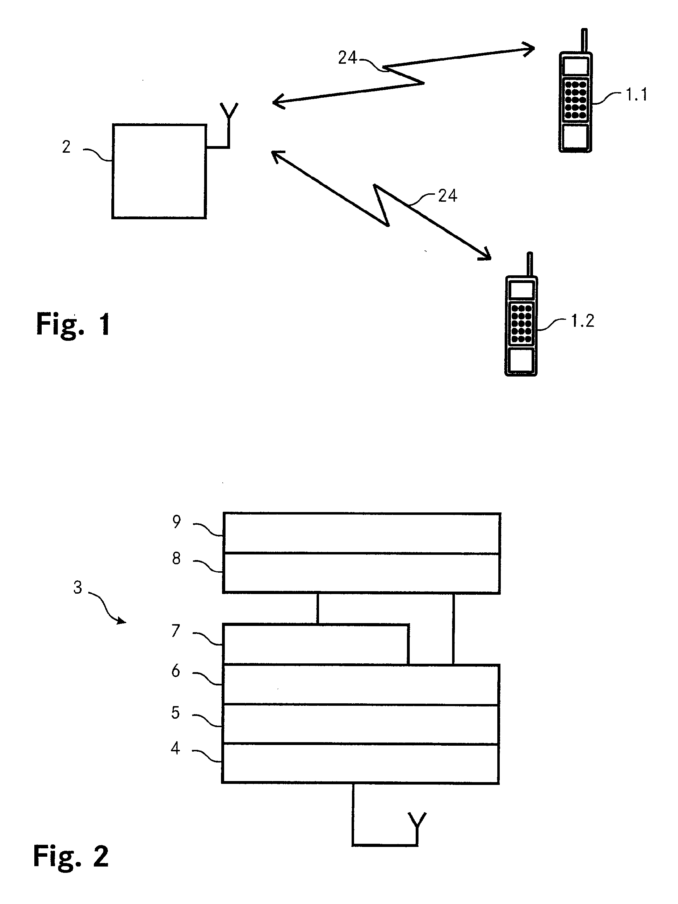

Figure 1 shows a transmission network for wireless voice data transmission. Two mobile terminals 1.1, 1.2 communicate with an access point 2 over a radio interface 24. They make use of a protocol stack according to the invention. Particularly the three uppermost layers of the DECT protocol stack are used over the two lowest layers of the HiperLAN2 protocol stack as well as a convergence layer between the DECT and the HiperLAN2 layers. For a user, the usage of the mobile terminals 1.1, 1.2 is exactly the same as the usage of a normal DECT terminal. But, unnoticed by the user, the transmission itself is done according to the HiperLAN2 wireless LAN standard.

The according protocol stack 3 is shown in figure 2. It comprises of the physical (PHY) layer 4 and the data link control (DLC) layer 5 of the HiperLAN2 standard. Furthermore, it comprises the three uppermost layers of the DECT protocol stack, the application layer 9 at the top, the interworking layer 8 below the application layer 9 and the network layer 7 below the interworking layer 8. Between the HiperLAN2 DLC layer 5 and the DECT network layer 7 is the convergence layer 6 which translates the HiperLAN2 messages into the DECT messages and vice versa. The convergence layer 6 contains among other functions some or all of the functions of the DECT data link control (DLC) layer.

This protocol stack 3 is implemented in the mobile terminals 1.1, 1.2. As its uppermost layers are DECT layers, the terminals 1.1, 1.2 can be operated by the user like normal DECT terminals. On the other hand the lowest layers are HiperLAN2 layers. Thus, high quality telephony services as well as high bitrate data transmission services are available with only one network infrastructure, namely a wireless LAN infrastructure.

Now follow some technical details of a transmission system according to the invention on the basis of the proposed DECT over HiperLAN2 example. A HiperLAN2 frame is 2 ms long and typically comprises several PDUs (protocol data unit), each having a length of 54 bytes. 164 µs of a frame could be allocated to broadcast signalling. HipeLAN2 enables datarates up to 54 Mbits/s. In our example we assume a 40 Mbits/s physical layer mode.

The DECT voice application is a part of the DECT standard and offers a datarate of typically 32 kbits/s. A DECT voice packet-is 40 bytes of data and 8 bytes of header. Combined, this fits into a single HiperLAN2 PDU. The DECT traffic is constant bitrate and there is no extra signalling. Therefore, the whole requirement for one DECT connection over HiperLAN2 is one uplink and one downlink PDU every five HiperLAN2 frames.

For a 10 ms period of time, the total time available for data transmission in HiperLAN2 is

$$10 \text{ ms} - 5 * 164 \text{ } \mu\text{s} = 9.18 \text{ ms.} \hspace{3cm} \text{I}$$

The time used by the DECT voice connection is twice the time of a single PDU divided by the bitrate plus the time of the headers for the up- and the downlink:

$$(432 \text{ bits/s}) / (40 \text{ Mbits/s}) + 20 \text{ } \mu\text{s} + 10 \text{ } \mu\text{s} = 51.6 \text{ } \mu\text{s} \hspace{3cm} \text{II}$$

Thus, a single voice connection uses 0.56% of the HiperLAN2 capacity. As no random access is required and the scheduling is extremely efficient we can assume that the system can be loaded up to 80%. Hence, about 142 simultaneous, full duplex voice connections are possible.

A similar analysis for VOIP over HiperLAN2 (assuming that one up- and one downlink VOIP packet of 688 bits length is needed every 7 HiperLAN2 frames and additionally a random access is needed every second uplink data packet and assuming a maximum load of about 70%) yields a usage of 0.67% of the HiperLAN2 capacity. Therefore, about 104 parallel voice connections should be possible in a 40 Mbits/s physical layer mode.

The following table shows the number of parallel voice connections for VOIP and DECT for different HiperLAN2 physical layer modes:

| HiperLAN2 physical layer mode | VOIP / HiperLAN2 number of connections | DECT / HiperLAN2 number of connections |
|---|---|---|
| 6 Mbits/s | 27 | 42 |
| 20 Mbits/s | 69 | 100 |
| 40 Mbits/s | 104 | 142 |
| 54 Mbits/s | 119 | 159 |

It can be seen, that DECT over HiperLAN2 offers substantially more capacity then VOIP at all physical layer data rates. This is in addition to superior quality and a larger feature set.

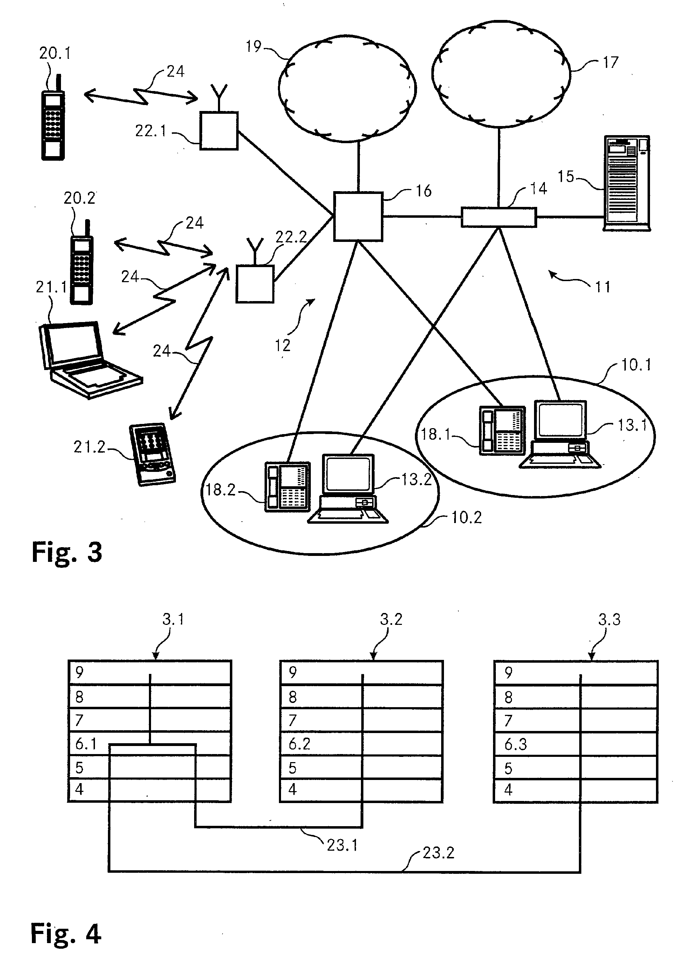

Figure 3 shows an example application of the invention in an office environment. There are two offices 10.1, 10.2 shown, each having access to a wired LAN 11 and a wired telephone network 12. Each office comprises a computer 13.1, 13.2, which is connected to an Ethernet switch/IP router 14. The Ethernet switch/IP router 14 is additionally connected to a server 15 and a PBX/DECT switch/Ethernet switch 16. Furthermore, the Ethernet switch/IP router 14 has access to the internet 17.

Besides the LAN network, each office 10.1, 10.2 comprises a telephone 18.1, 18.2 which is connected to the PBX/DECT switch/Ethernet switch 16 by normal telephone lines. To enable telphone calls to outside users, the PBX/DECT switch/Ethernet switch 16 is connected to a PSTN 19 (public switched telephone network).

The computers 13.1, 13.2, the Ethernet switch/IP router 14 and the server 15 constitute the wired part of the LAN 11. The telephones 18.1, 18.2 and the PBX/DECT switch/Ethernet switch 16 constitute the wired part of the telephone network 12.

The wireless part of the LAN 11 and the telephone network 12 comprises two non-IP wireless telephones 20.1, 20.2, a portable computer 21.1 with an IP based WLAN PC card, a PDA 21.2 (personal digital assistant) also with IP based WLAN capabilities and two access points 22.1, 22.2 which are connected to the PBX/DECT switch/Ethernet switch 16 by wire. Data transmission between the portable computer 21.1 and the access points 22.1, 22.2 is according to the HiperLAN2 standard.

As the telephones 20.1, 20.2 are devices according to the invention, they use the protocol stack 3 as shown in figure 2 to provide the DECT voice applications to a user and to communicate with the access points 22.1, 22.2 according to the HiperLAN2 standard.

Seamless handover is not part of the HiperLAN2 standard. As discussed above, one up-and one downlink packet is required every fifth HiperLAN2 frame, to sustain a DECT connection. To provide for example seamless handover of the mobile telephone 20.2 while moving away from access point 22.2 towards access point 22.1, the scheduling in the DLC layer of the access point 22.2 is slightly modified so that it does not try to send anything to the telephone 20.2 during the four frames which are not used for the DECT connection. One possibility to do this is to modify the DLC layer in a way that all downlink messages are sent multiple of five frames after the first message is received from the telephone 20.2. During these four frames, the telephone 20.2 could establish a connection to the access point 22.1.

Once the telephone 20.2 has connections to both access points 22.1, 22.2 it can stream data to both. Figure 4 shows the two message paths 23.1, 23.2 on the protocol stack level. The first message path 23.1 between the convergence layers 6.1, 6.2 of the protocol stack 3.1 of the telephone 20.2 and the protocol stack 3.2 of the access point 22.2 and the second message path 23.2 between the convergence layers 6.1, 6.3 of the protocol stack 3.1 of the telephone 20.2 and the protocol stack 3.3 of the access point 22.1.

Within the convergence layer 6.1 of the telephone 20.2 it is decided, which of the two data streams of the two message paths 23.1, 23.2 is passed to the upper DECT layers of the protocol stack 3.1. This decision can be made for every single packet. While moving away from access point 22.2 towards access point 22.1, the error bitrate of the data stream from access point 22.2 becomes higher, while the error bitrate of the data stream from access point 22.1 becomes lower. When the quality of the data stream from access point 22.2 becomes too poor, the connection is broke off and the handover, which is performed within the DECT part of the protocol stacks 3.1, 3.2, 3.3, is completed.

IF the access points 22.1, 22.2 actually were access point transceivers connected back to the same access point controller, both message paths would exist between the convergence layers of the telephone 20.2 and the access point controller.

Another use of such a handover procedure, is the possibility to change the communication frequency while staying connected to the same access point. If, for any reason, the interference situation in a certain environment becomes worse while moving around with a mobile terminal, the terminal can establish a second connection to the current acces point on a different frequency. The new frequency is chosen to better suit the current interference situation. While the first connection becomes worse the second connection is built up and the first can be broken so completing the frequency handover.

To summarise it can be stated that the invention allows to efficiently transmit voice data over a WLAN infrastructure. As only the convergence layer between the DECT layers and the HiperLAN2 layers has to be implemented, the invention enables low bitrate telephony services over a high bitrate data transmission network at a relatively low expense.

## Claims

1. Method for transmitting voice data over a wireless digital data transmission channel, **characterized in that** said voice data is transmitted by processing it with a certain number of uppermost layers (7, 8, 9) of a multiple layer, low bitrate, wireless voice transmission protocol stack and a certain number of lowest layers (4, 5) of a multiple layer, high bitrate, wireless LAN protocol stack

2. The method as claimed in claim 1, **characterized in that** said voice data is converged between said uppermost layers of said voice transmission protocol stack and said lowest layers of said data transmission protocol by processing it with a convergence layer (6).

3. The method as claimed in claim 1 or 2, **characterized in that** said voice data is transmitted by processing it with the uppermost layers of a DECT protocol stack.

4. The method as claimed in any of claims 1 to 3, **characterized in that** said voice data is transmitted by processing it with the lowest layers of a HiperLAN2 protocol stack.

5. The method as claimed in claim 3 and 4, **characterized in that** said voice data is transmitted by processing it with the three uppermost layers of said DECT protocol stack, particularly a network layer (7), an interworking layer (8) and an application layer (9) and by use of the two lowest layers of said HiperLAN2 protocol stack, particularly a physical layer (4) and a data link control (5) layer.

6. Device for transmitting voice data over a wireless digital data transmission channel, **characterized in that** the device comprises means for processing said voice data with a certain number of uppermost layers (7, 8, 9) of a multiple layer, low bitrate, wireless voice transmission protocol stack and a certain number of lowest layers (4, 5) of a multiple layer, high bitrate, wireless LAN protocol stack.

7. The device as claimed in claim 6, **characterized in that** it comprises means for converging (6) said voice data between said uppermost layers of said voice transmission protocol stack and said lowest layers of said wireless LAN protocol stack.

8.  The device as claimed in claim 6 or 7, **characterized in that** it comprises means for performing a seamless handover from a first basestation to a second or said first basestation.

9.  The device as claimed in any of claims 6 to 8, **characterized in that** it comprises means for determining and controlling a quality of service while transmitting said voice data.

**Fig. 1**

**Fig. 2**

Fig. 3

Fig. 4

**European Patent Office**

# EUROPEAN SEARCH REPORT

Application Number

EP 01 81 1176

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 38391 A (OPUSWAVE NETWORKS INC) 29 June 2000 (2000-06-29) * abstract * * page 14, line 20 - page 15, line 9 * * page 17, line 21 - page 18, line 4 * * page 53, line 4 - page 54, line 18 * * claims 12,16,19-21,23,24; figures 1,17 * | 1,3,5,6, 9 | H04L29/06 |
| Y |  | 2,4,7,8 |  |
| X | WO 99 48312 A (NOKIA MOBILE PHONES LTD) 23 September 1999 (1999-09-23) * abstract * * page 16, line 1-21 * * claims 17,19,23; figures 2,6 * | 1,3,6 |  |
| Y | WO 01 60108 A (THOMSON MULTIMEDIA) 16 August 2001 (2001-08-16) * page 1, line 1-18 * * figure 4 * | 2,4,7 |  |
| Y | WO 00 70812 A (NOKIA CORP) 23 November 2000 (2000-11-23) * abstract * * page 7, line 19-31 * * page 8, line 7-24 * | 8 | TECHNICAL FIELDS SEARCHED (Int.Cl.7) H04L |
| A | GARDNER M: "TESTING FOR A NEW TECHNOLOGY" TELECOMMUNICATIONS, DEDHAM, MA, US, vol. 27, no. 10, October 1993 (1993-10), pages 51-52,55, XP001009607 ISSN: 0040-2494 |  |  |

The present search report has been drawn up for all claims

| Place of search | Date of completion of the search | Examiner |
|---|---|---|
| THE HAGUE | 23 July 2002 | Gijsels, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 01 81 1176

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2002

| Patent document cited in search report | | Publication date | Patent family member(s) | | Publication date |
|---|---|---|---|---|---|
| WO 0038391 | A | 29-06-2000 | CN | 1350741 T | 22-05-2002 |
| | | | EP | 1142266 A1 | 10-10-2001 |
| | | | WO | 0038391 A1 | 29-06-2000 |
| | | | US | 2001022784 A1 | 20-09-2001 |
| | | | US | 2001001268 A1 | 17-05-2001 |
| | | | US | 2002048268 A1 | 25-04-2002 |
| WO 9948312 | A | 23-09-1999 | FI | 980623 A | 20-09-1999 |
| | | | FI | 981995 A | 19-09-1999 |
| | | | GB | 2336069 A | 06-10-1999 |
| | | | AU | 2849299 A | 11-10-1999 |
| | | | AU | 2950299 A | 11-10-1999 |
| | | | CN | 1301468 T | 27-06-2001 |
| | | | EP | 1064805 A1 | 03-01-2001 |
| | | | EP | 1062823 A1 | 27-12-2000 |
| | | | WO | 9948315 A1 | 23-09-1999 |
| | | | WO | 9948312 A1 | 23-09-1999 |
| | | | JP | 2002507870 T | 12-03-2002 |
| | | | AU | 2839199 A | 11-10-1999 |
| | | | CN | 1293876 T | 02-05-2001 |
| | | | EP | 1064804 A2 | 03-01-2001 |
| | | | WO | 9948311 A2 | 23-09-1999 |
| | | | JP | 2002507869 T | 12-03-2002 |
| WO 0160108 | A | 16-08-2001 | AU | 3738801 A | 20-08-2001 |
| | | | WO | 0160108 A1 | 16-08-2001 |
| WO 0070812 | A | 23-11-2000 | FI | 991102 A | 13-11-2000 |
| | | | FI | 991240 A | 13-11-2000 |
| | | | AU | 4570800 A | 05-12-2000 |
| | | | EP | 1177652 A1 | 06-02-2002 |
| | | | WO | 0070812 A1 | 23-11-2000 |

EPO FORM P0459

For more details about this annex : see Official Journal of the European Patent Office, No. 12/82